# FASCICULE DE BREVET EUROPEEN

(11) **EP 0 570 329 B1**
(45) Date de publication et mention de la délivrance du brevet: **30.10.1996**
(21) Numéro de dépôt: 93670002.0
(22) Date de dépôt: 14.05.1993
(51) Int. Cl.: F01N 3/04

(54) **Filtre pour lavage et rétention des gaz d'échappement de véhicules à moteur**
Filter zum Waschen und Festhalten der Abgase von Kraftfahrzeugen
Filter for washing and retention of exhaust gases of motor vehicle

(30) Priorité: 15.05.1992 PT 100490
(43) Date de publication de la demande: 18.11.1993
(73) Titulaire: Teles de Menezes Junior, Antonio, P-4200 Porto (PT)
(72) Inventeur: Teles de Menezes Junior, Antonio, P-4200 Porto (PT)
(74) Mandataire: Pelayo de Sousa Henriques, Rui

(56) Documents cités:
- US-A- 2 612 745
- US-A- 3 566 583

## Description

La présente invention consiste en un filtre pour lavage et rétention des gaz d'échappement des véhicules à moteur, dans le but de réduire l'émission de gaz toxiques et polluants produits par les échappements des véhicules à moteur.

Les systèmes traditionnels qui équipent les véhicules à moteur, notamment ceux équipés de moteurs à explosion, sont les catalyseurs.

Cependant, les catalyseurs, outre leur coût élevé, obligent à utiliser des combustibles "sans plomb", ont une vie courte et sont particulièrement sensibles aux démarrages à froid qui obligent à des systèmes de pré-chauffage pour éviter les effets particulièrement nocifs que ce type de démarrages a sur le revêtement intérieur.

Par un autre coté, on connaît encore les dispositifs référés dans les documents des brevets nos. US-A-2612745 et US-A-3566583. Tels dispositifs utilisent l'action d'un liquide filtrant qui retient les impuretés existantes dans les gaz d'échappement.

Dans le premier cas, la filtration est faite en obligeant les gaz à traverser un labyrinthe dans lequel les diverses sections se trouvent remplies avec ledit liquide filtrant. Avant, cependant, les gaz sont libertés de l'excès de l'eau qui transportent, en les faisant passer dans un condensateur. Par un autre côté, après la filtration, les mêmes gaz sont de nouveau obligés à traverser un parcours labyrinthique, de façon à provoquer la condensation et récupération du liquide filtrant.

Dans le deuxième cas, la filtration est faite en obligeant les gaz à traverser le mentionné liquide filtrant, provoquant, postérieurement, le secouage des gaz filtrés, en les faisant passer dans des chambres de secouage successives. Celles chambres-là sont dotés de ventilateurs qui provoquent la propulsion des gaz et le secouage des mêmes.

Dans le premier cas, car le passage des gaz par le condensateur (14) est fait avant la filtration, les gaz sales ont la tendance de déposer la saleté qui transportent dans les plaques (19) et dans les murs intérieurs du condensateur, en créant une pellicule isolante qui empêche l'échange de chaleur des gaz pour le circuit de l'eau de la réfrigération, ce qui implique, dans des déterminées conditions atmosphériques (de contenu d'humidité dans l'air élevé) qu'une partie significative de la condensation soit vérifiée dans la boîte (23), avec l'indésirable augmente du niveau du liquide dans telle boîte qui n'est pas munie d'aucun moyen de contrôle automatique du niveau du liquide référé, lequel, en s'élevant au-dessus du niveau des plaques (6) plus élevées, pourra compromettre le bon fonctionnement du système.

Dans le deuxième système, il n'a aussi aucun dispositif de contrôle qui peut prévenir l'éventuel excès de volume de liquide dans la chambre.

En outre, les crèmes que dans ce genre de dispositifs ont la tendance d'apparaître à la surface du liquide filtrant, ne sont pas prévenues ni combattues dans aucun des cas exposés, et on risque, dans le cas du brevet US-A-3 566 583, que les ventilateurs (35) de secouage de l'air restent avec les pelles sales avec des gommes ou d'autres impuretés qui diminuent son efficace et/ou provoquent des déséquilibres qui conduisent à un consume prématuré des respectives roulements.

Le présent filtre peut être appliqué à des moteurs à explosion - fonctionnant avec des combustibles avec ou sans plomb - à des moteurs diesel ou autres, parce qu'il aussi utilise 1' action d'un liquide filtrant qui retient les impuretés existantes dans les gaz d'échappement; ce liquide peut être remplacé facilement lorsqu'il est saturé. Le dit liquide filtrant sera choisi suivant le type de moteur et d'après le type de combustible utilisé.

Le filtre en question est constitué par un ou plusieurs réservoirs en série, ou un seul réservoir avec plusieurs sections, qui ont un liquide par où passent les gaz d'échappement avant le contact avec l'atmosphère.

Quand il y a plus d' un seul réservoir, ou plus d'une section dans un réservoir unique, les dits gaz passent successivement de réservoir en réservoir ou de section en section, étant filtrés progressivement de façon à ce qu'ils atteignent la pureté voulue à la sortie, avant la décharge dans l'atmosphère.

Chaque section du réservoir à liquide, ou chacun des réservoirs, au cas où il y en aurait plusieurs, est essentiellement constituée par une entrée et une sortie pour les gaz, par un diffuseur ou ensemble de diffuseurs qui transportent les gaz de l'entrée vers le liquide filtrant, par un ensemble de plaques perforées - dont la fonction est d'empêcher que la pression des gaz d'échappement n'entraîne le liquide filtrant vers l'extérieur du récipient - par un système de vases communicants qui permet au liquide existant dans les diverses sections ou réservoirs d'être au même niveau dans tous et encore par un orifice de purge, un orifice de remplissage et les tampons respectifs.

Le filtre selon la présente invention ce caractérise en ce qu'il y a des injecteurs (Q) de liquide filtrante qui introduisent dans le sein des gaz déjà partiellement filtrés des nuages de petites gouttes de liquide filtrante qui nettoient et refroidissent encore plus les mêmes gaz.

Par un autre côté, il y a des ventilateurs (P) qui, en outre de la fonction traditionnelle d'aspiration des gaz, ont encore la fonction d'aider les injecteurs à nettoyer les gaz, en provoquant dans les gaz la turbulence nécessaire à sa parfaite mixture avec les nuages de liquide filtrant.

Il y a encore des injecteurs additionnelles (Q) qui refroidissent les ventilateurs et nettoient ces pelles et, en outre, qui lavent directe ou indirectement la surface do liquide filtrant (K).

Il peut encore avoir des systèmes autonomes de réfrigération du liquide filtrant, d'après la température de l'ébullition, constitués, par exemple, par les traditionnels ensembles de pompe, radiateur et ventilateur, en profitant, préférablement, des moyens de pompage do liquide (K) vers les injecteurs (Q).

Préférablement, le filtre est doté d'un dispositif automatique (S) pour la purge de l'eau résultant de la condensation (dont on recommande particulièrement l'utilisation au cas où le liquide filtrant serait de l'huile)

Outre les éléments référés, il pourra y avoir soit des chambres de décompression à la sortie du réservoir (ou à la sortie du dernier réservoir, au cas où il y en aurait plus d'un) de façon à provoquer la condensation de la vapeur du liquide filtrant existent dans les gaz purifiés.

Les avantages apportées par le présent filtre résultent du fait de que après la filtration résultant de l'injection d'un gaz dans un liquide, à travers d'une ouverture plongé, on atteint une filtration complémentaire résultant de l'injection d'un jet de liquide dans une courent de gaz (ce qui favorise la précipitation des impuretés transportés dans les gaz) catalysée par l'action des ventilateurs qui développent la mixture de liquide avec le gaz.

En outre, les jets de liquide ont une triple action combinée: ils nettoient et refroidissent les ventilateurs, en prévenant que les particules arrivés avec les gaz se collent aux impulseurs ou pelles des ventilateurs; ils refroidissent et nettoient les gaz; et ils dispersent les restes (crème) arrivés à la surface du liquide filtrante. Ainsi, dans un seul dispositif on réalise la fonction de filtrage et refroidissement.

Le pot d'échappement traditionnel, au cas où ils resterait sur le véhicule, ne sera traversé par les gaz d'échappement que s'il y avait une panne dans le filtre ou ses parties composants, notamment la rupture d'un des réservoir, où le parcours traditionnel des gaz serait rétabli au moyen d'une valve qui pourra être placée a l'entrée du filtre le mettant hors service.

Suit la description du filtre à l'aide d'exemples et références aux dessins en annexe, où:

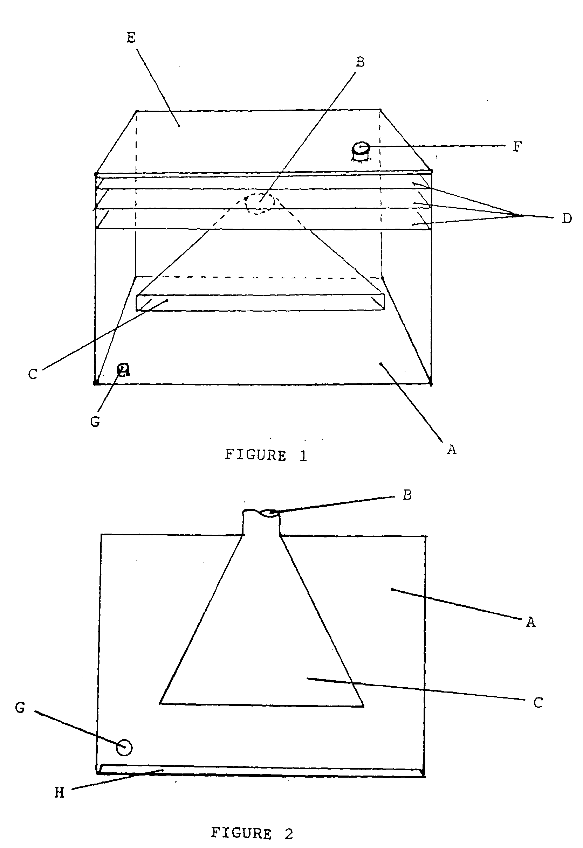

Les figures 1 à 5 montrent un exemple de réalisation du filtre inventé avec un seul réservoir (A), représenté en coupe et vu en perspective dans la figure 1, où l'on peut voir l'entrée (B) de gaz, le diffuseur (C), les plaques perforées (D), le couvercle (E) du réservoir et son orifice (F), et aussi l'orifice (G) de purge du réservoir.

Dans la figure 2, le filtre - qu'on observe sans les plaques perforées, pour mieux le voir - ce trouve représenté en coupe d'après un plan horizontal, où l'on peut voir le réservoir (A) et sont orifice de purge (G), l'entrée (B) des gaz la rainure de sortie (H) des gaz, après filtrage.

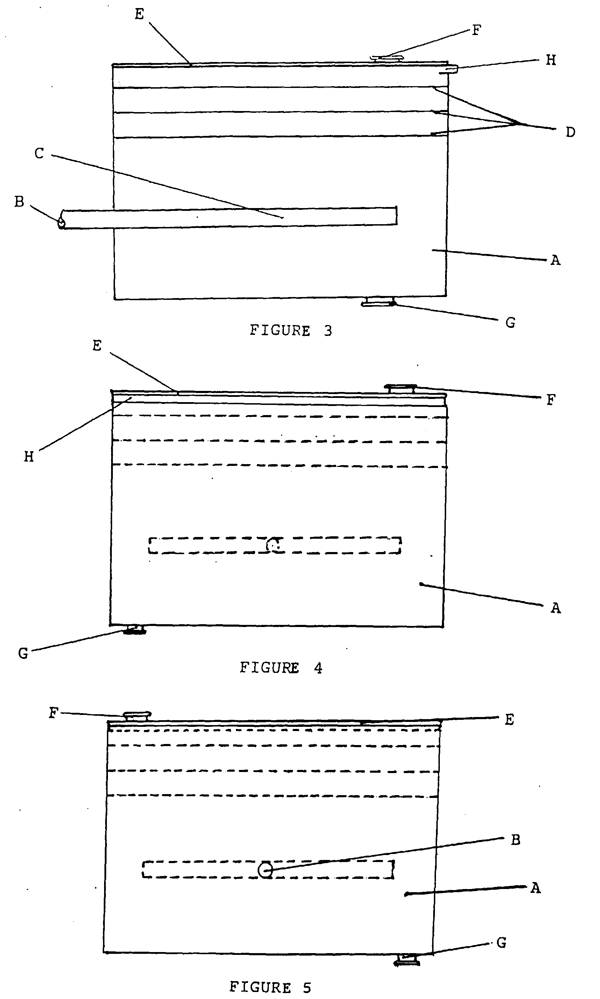

Dans la figure 3, où le réservoir (A) apparaît représenté en coupe, d'après un plan vertical, on voit l'entrée (B) des gaz, le diffuseur (C), les plaques perforées (D), le couvercle (E) et sont orifice (F), l'orifice de purge (G) et aussi la rainure (H) pour la sortie des gaz après filtrage.

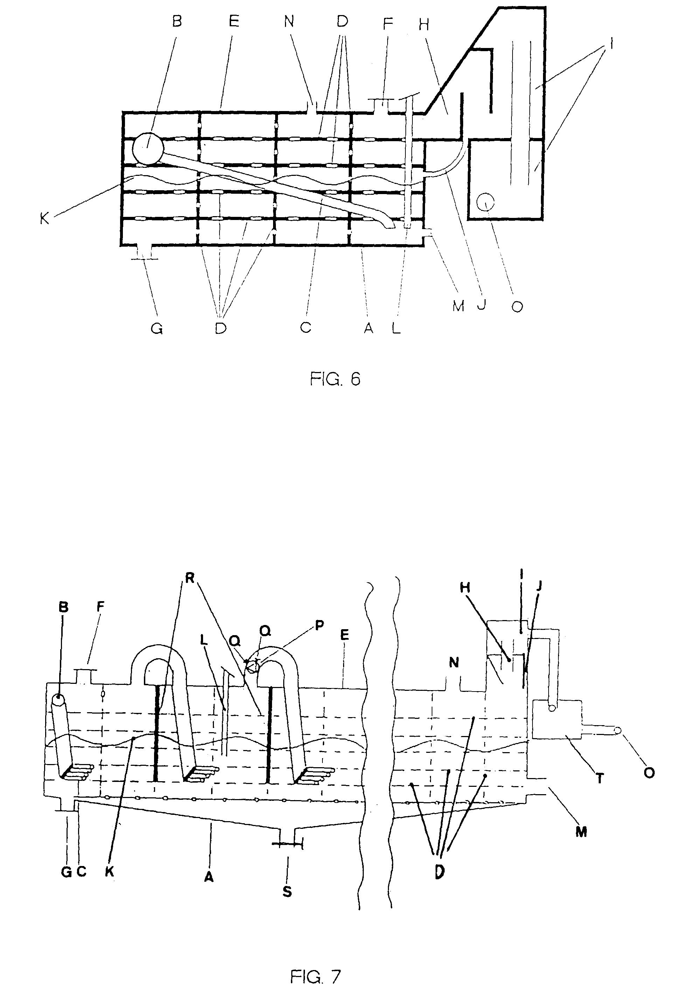

Dans les figures 4 et 5, le filtre se trouve représenté dans ses parties antérieure et postérieure, respectivement, où l'on peut voir le réservoir (A), le couvercle (E), les orifices (F) et (G) et aussi, dans la première des figures, la rainure (H) pour la sortie des gaz après filtrage, et, dans la deuxième, l'orifice (B) d'entrée des gaz provenant du moteur.

Relativement au fonctionnement, le filtre fonctionne d'après la description ci-après:

Les gaz dégagés par le moteur sont introduits dans le filtre au moyen du tuyau (B), passant en suite par un diffuseur (C) étranglé à l'entrée et large à la sortie où les gaz subissent une décompression, étant alors lancés dans le réservoir (A) qui contient un liquide filtrant qui retient les éléments toxiques et abaisse la température des gaz.

Immédiatement au-dessus du diffuseur (C), et aussi au-dessus du niveau de la superficie du liquide filtrant, ce trouvent les plaques perforées (D) dont la fonction est d'empêcher que, conjointement avec les gaz filtrés, ne s'échappent vers l'extérieur du réservoir des bulles du liquide filtrant, à travers la rainure (H) placée dans la partie avant du réservoir, près du couvercle (E), d'où les gaz sortiront après filtrage.

Ce filtre, qui ne nécessite pratiquement pas de manutention, sauf le contrôle du niveau du liquide du réservoir (A), possède dans le couvercle (E) un orifice (F) de remplissage et, au fond du réservoir, un orifice (G) de purge; ces orifices que permettent le nettoyage et le remplissage du réservoir ont des bouchons qui les maintiennent fermés pendant le fonctionnement du filtre.

Le liquide filtrant et refroidisseur des gaz d'échappement peut être, par exemple, une huile minérale, ou végétale, et le nettoyage des gaz filtrés par ce moyen permet qu'ils soient envoyés dans l'atmosphère sans agression polluante.

La figure 6 montre un autre exemple de réalisation du filtre, testé sur un moteur à combustion interne fonctionnant approximativement d'après le cycle Otto avec de l'essence à plomb, le liquide filtrant utilisé étant l'eau.

Dans cette figure, on observe le filtre d'après une coupe transversale, montrant le réservoir (A), l'entrée (B) des gaz, les diffuseurs (C) - au nombre de quatre, constitués par des tubes qui partent d'un tube d'entrée de gaz placé à l'entrée du filtre - les plaques perforées (D), horizontales et verticales, la partie supérieure (E) du corps du réservoir, et son orifice (F), pour le remplissage, l'orifice (G) de purge du réservoir, la sortie (H) de gaz d'échappement du corps du réservoir vers la chambre de décompression (I), le tube respectif de branchement (J) au réservoir pour la sortie de l'eau condensée dans cette chambre, le liquide filtrant (K) où se trouve plongée la pointe du thermostat (L), qui détecte la température a partir de laquelle le système de réfrigération de l'eau entre en fonctionnement, lequel capte l'eau du réservoir à travers l'orifice (M), la renvoyant au même réservoir par l'orifice (N), et l'orifice (O), par où les gaz d'échappement sortent du filtre vers l'atmosphère.

Enfin, la figure 7 montre le dernier exemple de réalisation du filtre, testé sur un moteur à combustion interne Diesel, dont le liquide filtrant a été l'huile.

La dite figure représente une coupe du filtre où l'on voit le réservoir (A) avec plusieurs sections, pour filtrages multiples des gaz, où les composants signalés par les références (B) à (O) sont du type de ceux signalés sur la figure 6, où l'ont voit aussi le ventilateur (P) d'aspiration des gaz partiellement filtrés, les injecteurs respectifs (Q) du liquide filtrant, les plaques (R) qui séparent les diverses sections du réservoir, le purgeur automatique (S) de l'eau - qui retire du réservoir à huile l'eau condensée pendant le processus de filtrage des gaz déposés au fond du réservoir à cause de sa plus grande densité - et encore le réservoir supplémentaire (T), pour l'eau retirée des gaz, à la sortie du filtre.

## Revendications

1. Filtre pour lavage et rétention de gaz d'échappement de véhicules à moteur, comprenant un ou plusieurs réservoirs en série ou un seul réservoir r (A) avec plusieurs sections, contenant un liquide filtrant (K); un ou plusieurs diffuseurs (C) de gaz d'échappement, montés avec la bouche de sortie des gaz plongée dans le liquide filtrant (K); plusieurs plaques perforées (D), dont quelques unes totalement ou partiellement plongées dans le liquide filtrant (K), dont l'une d'elles au moins située au-dessus du niveau de surface du dit liquide; une chambre de décompression (I) après le dernier réservoir ou la dernière section; un branchement de cette chambre au dit réservoir (A) au moyen d'un tube fin (J) de renvoi du liquide condensé; et, au cas où il serait constitué par plusieurs réservoirs ou un réservoir de plusieurs sections, un tube fin de passage qui les lie, placé sous la surface du liquide filtrant qu'ils contiennent; caractérisé en ce qu'il y a des injecteurs (Q) de liquide filtrant qui introduisent dans le sein des gaz déjà partiellement filtrés des nuages de petites gouttes de liquide filtrant qui nettoient et refroidissent encore plus les mêmes gaz; en ce qu'il y a des ventilateurs (P) qui, outre la fonction traditionnelle d'aspiration des gaz, ont encore la fonction d'aider les injecteurs à nettoyer les gaz, en provoquant dans les gaz la turbulence nécessaire à sa parfaite mixture avec les nuages de liquide filtrant; en ce qu'il existe des injecteurs additionnels (Q) qui refroidissent les ventilateurs et nettoient ses pelles et, en outre, qui lavent directement ou indirectement la surface du liquide filtrant (K).

2. Filtre conforme à la première revendication, caractérisé par la réfrigération du liquide de filtrage d'après la température de l'ébullition, pouvant avoir recours à cet effet à l'utilisation d'un circuit de réfrigération extérieur au filtre en profitant, préférablement, des moyens de pompage du liquide (K) vers les injecteurs (Q).

3. Filtre conforme à la première revendication, caractérisé en ce qu'il existe un dispositif automatique (S) pour la purge de l'eau résultant de la condensation.

## Patentansprüche

1. Filter für die Spülung und Speicherung von motorisierten Fahrzeugeabgasen bestehend aus nur einem einzigen oder dann aus mehreren Speichern in Reihe,oder nur aus einem Speicher (A) mit mehreren Abschnitten,die eine Filtrierflüssigkeit enthalten (K) ; ein oder mehrere Abgasediffusoren (C) mit der Exhaustionkante zusammenmontiert und in der Filtrierflüssigkeit getaucht (K) ; mehrere perforierte Platten (D),einige davon völlig oder nur teilweise in der Filtrierflüssigkeit getaucht (K), aber wenigstens eine davon,auf der Höhe der erwähnten Flüssigkeitsspiegel gestellt; eine Dekomepressionskanmer (I) hinter dem letzten Speicher oder Abschnitt; eine Gabelung soll diese Kammer von diesem Punkt aus mit dem erwähnten Speicher verbinden (A) durch ein kleines Rohr (I), das der kondensierten Flüssigkeit erlaubt;sollte der Fall von mehreren Speichern sein,oder von einfach nur einem mit verschiedenen Abschnitten, da soll sie ein enges Durchrohr verbinden,unten dem Spiegel der Filtrierflüssigkeit die sie enthalten; kennzeichend dafur sind die Einspritzpumpen (Q) von Filtrierflüssigkeit die in den Kern von Gasen schon teilweise filtriert, Wolken aus kleinen Filtrierflüssigkeitstropfen einführen. Diese werden die erwähnten Gasen noch gründlicher ausspülen und abkülhen ; noch als Kennzeichen dafür sind die vorhanden Gebläse (P) die nicht nur die traditionelle Gassaugungwirkung haben sondern auch noch eine andere - sie sollen den Einsritzpumpen bei der Gasreinigung helfen denn sie die notwendige Turbulenz in den Gasen erregt, wobei ihre vollkommende Mischung mit den Wolken aus Filtrierflüssigkeit stattfindet;noch kennzeichend dafür sind auch die zusätzlichen Einspritzpumpen (Q) die die Gebläse abkühlen und ihre Schalen auch reinigen; ausserdem spülen sie auch direkt oder mittelbardie Filtrierflüssigkeitspiegel aus (K).

2. Filter dem ersten Antrag zufolge; kennzeichend dafür ist die Filtrierflüssigkeitsreinigung der Siedepunkt entsprechend wobei auch dazu eine Abkühlungsleitung ausserhalb des Filters benutzt werden kann und wenn möglich von den Flüssigkeitspumpennitteln aus (K) bis zu den Einspritzpumpen (Q).

3. Filter dem ersten Antrag nach; dafür kennzeichend eine automatische Vorrichtung (S) zur Wasserreinigung aus der Kondensation ergebend.

## Claims

1. Filter for washing and retaining exhaust gases of motorised vehicles, comprising one or several reservoirs in series or a single reservoir (A) with several sections, containing a filtering liquid (K); one or several diffusers (C) of exhaust gases, assembled with the exhaustion edge plunged in the filtering liquid (K); several perforated plates (D), of which some are totally or partially plunged in the filtering liquid (K), with at least one of them placed over the surface level of the mentioned liquid; a decompression chamber (I) after the last reservoir or the last section; a connecting branch from this chamber to the mentioned reservoir (A) by means of a narrow tube (J) which allows the condensed liquid to turn back; and, in case it comprises several reservoirs or one reservoir with several sections, a narrow passage tube that connects them, placed under the surface of the filtering liquid which they contain; characterised by having injectors (Q) of filtering liquid which introduce in the core of the gases already partially filtered clouds of small drops of filtering liquid which clean and cool even more the mentioned gases; by having blowers (P) which besides the traditional function of suction of the gases, also have the function of helping the injectors to clean the gases, by provoking in the gases the necessary turbulence to their perfect mixture with the clouds of filtering liquid; by having additional injectors (Q) which cool the blowers and clean their peels and, besides that, which wash directly or indirectly the surface of the filtering liquid (K).

2. Filter according to the first claim, characterised by the cooling of the filtering liquid according to its ebullition temperature, with the possibility of using to this effect a cooling circuit external to the filter, preferably, taking advantage of the pumping means of the liquid (K) to the injectors (Q).

3. Filter according to the first claim, characterised by having an automatic device (S) for the purge of the water resulting from the condensation.
